(19) Europäisches Patentamt
European Patent Office
Office européen des brevets

(11) **EP 2 239 639 B1**

(12) **FASCICULE DE BREVET EUROPEEN**

(45) Date de publication et mention
de la délivrance du brevet:
**21.03.2012 Bulletin 2012/12**

(51) Int Cl.:
***G05B 17/02*** (2006.01)  ***G05B 23/02*** (2006.01)

(21) Numéro de dépôt: **10290017.2**

(22) Date de dépôt: **14.01.2010**

(54) **Nouveau procédé de contrôle et régulation d'une unité industrielle faisant appel à une phase d'identification en boucle fermée des paramètres de fonctionnement de ladite unité**

Verfahren und Vorrichtung zur Regelung und Steuerung einer industriellen Analge mit Identifizierung der Betriebsparametern in Geschlossener Schleife

Method and device for controlling and regulating of an industrial unit using a closed loop identification phase of its operating parameters

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **06.02.2009 FR 0900531**

(43) Date de publication de la demande:
**13.10.2010 Bulletin 2010/41**

(73) Titulaire: **IFP Energies nouvelles**
**92852 Rueil-Malmaison Cedex (FR)**

(72) Inventeurs:
• **Couenne, Nicolas**
**69008 Lyon (FR)**
• **Bader, Jean-Marc**
**69440 Taluyers (FR)**
• **Creff, Yann**
**38138 Les Coted d'Arey (FR)**

(56) Documents cités:
**US-A1- 2002 099 724**

EP 2 239 639 B1

## Description

DOMAINE DE L'INVENTION

Le domaine de l'invention est celui des procédés avancés de contrôle et régulation des unités industrielles. Dans un procédé de contrôle avancé selon le vocabulaire de l'homme du métier, l'unité industrielle à réguler est représentée par un modèle qui permet d'anticiper sur les actions à mettre en oeuvre en atteignant un niveau de finesse sur les actions correctrices que ne permet pas la régulation au moyen de simples PIDF.

Le modèle représentant l'unité est généralement un modèle dynamique et linéaire au sens où les grandeurs de sortie sont reliées aux grandeurs d'entrée par un système d'équations linéaires. La représentation du modèle se fait donc naturellement au moyen d'une matrice et le but de l'opération appelée identification est de trouver le meilleur jeu de coefficients de la matrice représentative du modèle. Pour assurer la phase d'identification on utilise dans la présente invention un contrôleur linéaire prédictif multivariable.

Plus précisément, l'acquisition des données nécessaires à l'identification se fait en boucle fermée, c'est à dire pendant que le contrôleur pilote l'unité industrielle, ce qui permet de réduire le temps de production de l'unité éventuellement hors spécification.

Dans le contexte de la présente invention, on appelle modèle d'une unité industrielle une représentation du comportement de l'unité au moyen d'un ensemble d'équations reliant les variables d'entrée (MV), les variables d'état (X) et les variables de sortie (CV) de l'unité.

La phase d'identification décrite s'applique aux modèles qui ont une forme linéaire. On entend par forme linéaire le fait que les variations des variables d'entrées (MV), les variables d'état (X) et les variations des variables de sortie (CV) sont liées entre elles par les équations générales d'un modèle dynamique linéaire stationnaire (en abrégé MDL) :

$$dX/dt = A\,X + B\,(MV)$$

$$(CV)\ = C\,X + D\,(MV)$$

Le modèle MDL caractérise donc l'évolution de la dérivée temporelle de X comme une application linéaire par rapport à X et par rapport aux MV. De manière similaire, l'évolution des CV est décrite par une application linéaire par rapport à X et par rapport aux MV.

Les MV sont par exemple les débits de charge, débits d'utilité, la température de la charge etc.

Les CV sont par exemple la conversion, la teneur en certains constituants.

Les variables d'état sont représentées par X et peuvent être définies comme toute grandeur permettant de décrire l'unité à chaque instant (température, pression, composition des flux circulant dans l'unité...).

Le contrôleur linéaire prédictif multivariable (appelé MVAC dans la suite du texte) travaille en boucle fermée, c'est-à-dire qu'à partir de la mesure de tout ou partie des CV et de leur comparaison par rapport aux objectifs fixés (valeurs de consignes, limites hautes et basses), il calcule et applique sur l'unité industrielle les valeurs des MV requises pour atteindre ou maintenir les objectifs pour les CV.

Pour effectuer ses calculs, le contrôleur MVAC utilise une description approchée du comportement du procédé sous la forme d'un modèle MDL noté M(n) dans la suite du texte. L'indice (n) indique que le modèle est atteint au bout d'un certain nombre d'itérations à partir d'un modèle initiale M0 qui lui peut être relativement éloigné du comportement de l'unité industrielle.

Le modèle MDL est entièrement caractérisé par les 4 matrices A, B, C et D.

De part l'écriture de ces équations, la prise en compte des couplages entre les variables d'entrée, de sortie et d'état est intrinsèque. Ainsi une MV peut agir sur une ou plusieurs composantes de l'état X et par la même agir sur plusieurs CV à la fois. Alternativement, une MV peut agir directement sur plusieurs CV à la fois (matrice D). L'opération appelée "identification", ou phase d'identification, consiste à calculer la valeur des coefficients des 4 matrices A, B, C et D utilisées dans le modèle.

Cette opération est automatiquement réalisée par un logiciel d'identification appelé ISIAC à partir d'un ensemble de données caractérisé par les mesures des MV et des CV. L'expression "ensemble de données" désigne un ou plusieurs enregistrements dans le temps des variables d'entrée MV(t) et des variables de sortie CV(t). Un tel enregistrement est appelé collecte. Une collecte doit être réalisée au minimum sur un intervalle de temps supérieur à la réponse dynamique de la CV la plus lente.

En effet, il est souhaitable qu'après une période transitoire, correspondant à la variation des CV consécutive à une ou plusieurs variations des MV, la collecte se poursuive jusqu'à la stabilisation des CV mesurées. Par ailleurs, pour être exploitable par le logiciel d'identification ISIAC, une collecte doit contenir suffisamment d'information fréquentielle, c'est à dire disposer de variations mesurées des CV plus importantes que celles dues aux bruits associés aux capteurs assurant la mesure de ces variables.

EXAMEN DE L'ART ANTERIEUR

L'art antérieur dans le domaine des opérations d'identification de procédé en boucle fermée est essentiellement représenté par le brevet US 6,819,964, qui décrit une méthode basée sur l'utilisation de variables cachées (appelées "shadow system controlled variables" dans le brevet cité). Pour être appliquée, cette méthode nécessite une modification de la structure du modèle utilisé par le contrôleur.

La méthode utilisée dans la présente demande est une méthode d'identification de procédé en boucle fermée, caractérisée par le fait qu'elle ne fait appel à aucune variable cachée, ce qui la différencie significativement de la méthode décrite dans le brevet US 6,819,964. Elle repose sur une utilisation particulière d'une fonctionnalité disponible dans le contrôleur MVAC, fonctionnalité appelée cible externe pour les MV (traduction de "cibles externes").

Cette fonctionnalité du contrôleur MVAC, utilisable sans aucune modification de la structure du modèle MDL, permet, quand ceci est possible, d'orienter simplement les MV vers des objectifs spécifiés, tout en continuant à satisfaire prioritairement les objectifs des CV. Par ailleurs, MVAC permet d'atteindre aussi vite que souhaité les cibles définies sur les MV.

Enfin, contrairement à la méthode décrite dans le brevet US 6,819,964, il n'est pas nécessaire selon l'invention de vérifier l'état des CV par rapport à leur objectif avant de lancer la procédure de modification des MV.

## DESCRIPTION SOMMAIRE DES FIGURES

La figure 1 représente un schéma fonctionnel du procédé utilisé dans l'exemple 1 comportant deux grandeurs d'entrée (MV1) et (MV2) et une grandeur de sortie (CV)

La figure 2 représente un schéma du procédé en cours d'identification avec le contrôleur MVAC connecté au procédé en boucle fermé et alimenté par deux grandeurs dites "cibles externes" (ET1) et (ET2).

La figure 3 représente trois graphes destinés à illustrer l'opération d'identification: le graphe supérieur correspond à la variation de la (CV) dans le temps, le graphe intermédiaire correspond à la variation de la (MV1), et le graphe inférieur correspond à la variation de la (MV2). La légende de ces 3 graphes est donnée dans l'exemple lui même.

## DESCRIPTION SOMMAIRE DE L'INVENTION

La présente invention peut se définir comme un procédé de contrôle et régulation avancé applicable à toute unité industrielle présentant des grandeurs d'entrée et des grandeurs de sortie reliées entre elles de manière linéaire. C'est à dire une unité susceptible d'être représentée par un modèle linéaire reliant les grandeurs d'entrée et de sortie, tel que défini au paragraphe précédent.

Le procédé de contrôle et régulation fait appel à une phase (ou opération) d'identification des paramètres du modèle dynamique linéaire représentant l'unité industrielle. Le présent procédé de contrôle et régulation est particulièrement adapté à des unités industrielles devant assurer une production régulière dans le temps et respectant diverses contraintes sur les produits obtenus. Parmi ces contraintes on peut citer le niveau de pureté, par exemple la teneur en soufre dans un procédé d'hydrodésulfuration, ou la valeur d'une caractéristique comme par exemple l'indice d'octane d'une essence dans une unité de reformage catalytique des essences, ou encore la température de craquage dans une unité de craquage catalytique destinée à produire des bases pour essence ou dans un mode de fonctionnement particulier du propylène.

La difficulté dans l'opération d'identification appliquées à des unités industrielles est d'obtenir rapidement les valeurs optimales des paramètres du modèle de l'unité en perturbant le moins possible la production.

Le contrôleur MVAC utilisé dans l'opération d'identification selon la présente invention offre une fonctionnalité dite "cible externe" qui permet d'appliquer des variations des variables d'entrée MV en intégrant un ou plusieurs critères de respect des contraintes sur les variables de sortie CV, ces critères restant toujours prioritaires. De cette façon, les contraintes de production sont toujours respectées. Par ailleurs, la présente opération d'identification inclut un critère d'itération relativement fin qui permet de reprendre l'itération lorsque cela est nécessaire à une étape déterminée du déroulement de ladite opération.

Plus précisément, la présente invention peut se définir comme un procédé de contrôle avancé d'une unité industrielle faisant appel à une opération d'identification des paramètres du modèle dynamique linéaire de ladite unité, ladite opération d'identification s'effectuent en boucle fermée et faisant appel à un contrôleur (MVAC) et à un logiciel d'identification (ISIAC), et ladite opération d'identification consistant en la succession d'étapes suivante:

1 <u>étape d'initialisation,</u> dans laquelle à partir de données coilectées via des modifications manuelles par l'opérateur, le logiciel ISIAC génère un premier modèle (MO) du procédé, modèle utilisé par la suite par le contrôleur MVAC pour piloter l'unité industrielle,

2 <u>étape de génération des variations des MV,</u> dans laquelle, hors ligne, c'est à dire sans lien avec le fonctionnement courant de l'unité industrielle, ISIAC génère des variations pour chaque MV, ces variations pour chaque MV étant constituées d'une suite d'incréments et de décréments, espacés de manière régulière ou non, et d'amplitudes telles qu'elles induisent des variations mesurables de tout ou partie des CV,

3 <u>étape de validation des variations des MV et de réglage du contrôleur MVAC.</u> dans laquelle, hors ligne, des simulations du comportement de l'unité pilotée par le contrôleur MVAC sont réalisées en reliant le contrôleur MVAC à un simulateur dynamique, qui reproduit approximativement le fonctionnement de l'unité et en utilisant le modèle M(n) disponible à cette étape, les variations définies à l'étape 2 étant mises en oeuvre en simulation via la fonctionnalité "cible externe" de MVAC, les amplitudes des variations sur les MV définies à l'étape 2 étant ajustées, les objectifs sur les CV étant relaxés, et le réglage du contrôleur étant affiné par intervention d'un opérateur,

4 étape de génération de réponses de unité industrielle, dans laquelle le contrôleur MVAC tel que réglé à l'issue de l'étape 3, est connecté à l'unité industrielle en boucle fermée et applique automatiquement sur l'unité industrielle les variations définies sur les MV à l'étape 3, via la fonctionnalité "cible externe",

5 étape de génération des paramètres par ISIAC, dans laquelle hors ligne, le logiciel d'identification ISIAC calcule les paramètres du modèle à partir des données générées à l'étape 4,

6 étape d'évaluation de la précision du modèle, dans laquelle le logiciel d'identification ISIAC effectue un calcul de la précision des paramètres obtenus à l'issue de l'étape 5 à partir d'un critère permettant de décider a) l'arrêt des itérations si la précision est satisfaisante; b) l'itération à partir de l'étape 2 si la précision est insuffisante sur un ou plusieurs paramètres; c) l'itération à partir de l'étape 4 dans le cas où l'imprécision provient de perturbations du fonctionnement de l'unité pendant l'application des variations sur les MV.

Le procédé de contrôle et régulation selon l'invention peut s'appliquer à une unité d'hydrodésulfuration d'une charge hydrocarbonée de type essence ou gazole, dans laquelle les grandeurs d'entrée sont le débit d'alimentation (MV1) de l'unité et la température à l'entrée de l'unité d'hydrodésulfuration (MV2) et la grandeurs de sortie (CV) est la teneur en soufre de l'essence ou du gazole traité.

Le procédé de contrôle et régulation selon l'invention peut également s'appliquer à une unité d'hydrogénation d'essences oléfiniques issues d'un procédé de craquage catalytique dans lequel les grandeurs d'entrée sont le débit d'hydrogène (MV1) et le débit de fluide froid destiné à bloquer les réactions (MV2) et les grandeurs de sortie sont la teneur en styrène en sortie de l'unité (CV1) et la différence de température entre la sortie et l'entrée de l'unité (CV2).

Le présent procédé peut s'appliquer à toute unité présentant des variables d'entrée (MV) et des variables de sortie (CV), et dont le comportement peut être représenté par un modèle linéaire.

Parmi les unités du raffinage on peut citer à titre d'exemple, sans que cela soit limitatif,

- une unité d'hydrodésulfuration d'une charge hydrocarbonée de type essence ou gazole, dans laquelle les grandeurs d'entrée sont le débit d'alimentation (MV1) de l'unité et la température à l'entrée de l'unité d'hydrodésulfuration (MV2) et la grandeurs de sortie (CV) est la teneur en soufre de l'essence ou du gazole traité.

- une unité d'hydrogénation d'essences oléfiniques issues d'un procédé de craquage catalytique, dans laquelle les grandeurs d'entrée sont le débit d'hydrogène (MV1) et le débit de fluide froid destiné à bloquer les réactions (MV2) et les grandeurs de sortie sont la teneur en styrène en sortie de l'unité (CV1) et la différence de température entre la sortie et l'entrée de l'unité (CV2).

## DESCRIPTION DETAILLEE DE L'INVENTION

De façon plus précise, le procédé de contrôle et régulation avancé de la présente invention fait appel à une phase d'identification des paramètres d'un modèle linéaire représentant le comportement de l'unité industrielle devant être régulée.

La phase d'identification des paramètres du modèle de l'unité fait appel à un contrôleur prédictif multivariable linéaire (MVAC) qui résout périodiquement avec une période T (typiquement de l'ordre d'1 minute) un problème de forme quadratique, c'est à dire une forme contenant un critère quadratique par rapport aux variables d'optimisation. On entend par forme quadratique une expression mathématiques faisant appel au carré des variables d'optimisation.

Par ailleurs les grandeurs d'entrée MV doivent respecter un certain nombre de contraintes.

Les variables d'optimisation sont un ensemble de valeurs futures que devraient prendre les MV pour que les contraintes soient respectées au mieux et que ledit critère quadratique soit minimisé. Pour chaque MV, notée MVi, on trouve dans cet ensemble la valeur à appliquer sur l'unité industrielle à l'instant suivant immédiatement le calcul effectué, MVi(0), ainsi que des valeurs à appliquer plus tard, à différents multiples de la période T, MVi(xT), x appartenant à une suite croissante d'entiers.

De cet ensemble de valeurs calculées, seules les MVi(0) sont réellement appliquées sur le procédé.

Un nouveau problème d'optimisation est résolu à la période suivante.

Les contraintes linéaires du problème d'optimisation peuvent permettre de garantir au mieux que :

- les MV restent entre des bornes minimales et maximales spécifiées;
- les variations des MV d'une itération à l'autre restent entre des bornes minimales et maximales spécifiées;

- les CV restent entre des bornes minimales et maximales spécifiées.

Le critère quadratique du problème d'optimisation peut comprendre l'addition de plusieurs termes :

- des termes pénalisant l'écart entre les CV et les trajectoires désirées qui leur sont affectées;
- des termes pénalisant la variation des MV d'une itération à l'autre (termes utilisés en conjonction ou non avec les contraintes de variation des MV);
- des termes pénalisant l'écart entre les MV et les trajectoires désirées qui leur sont affectées. Dans le contrôleur MVAC, ces trajectoires désirées pour les MV existent effectivement et sont renseignées par les grandeurs appelées "cibles externes".

Dans la suite du texte nous utilisons les notations suivantes :

MDL désigne le modèle dynamique linéaire représentant le comportement de l'unité à réguler.

MVAC désigne le contrôleur linéaire prédictif multivariable entièrement compatible avec la phase d'identification en boucle fermée.

ISIAC désigne le logiciel d'identification, c'est-à-dire de calcul des paramètres du modèle MDL. Le logiciel ISIAC est aussi utilisé pour générer les valeurs des variables d'entrée à appliquer au procédé pendant la phase de collecte des données. Ces valeurs sont par exemple issues de séquences binaires pseudo-aléatoires (SBPA) et sont déterminées pour mettre en évidence tout le spectre fréquentiel du procédé et pour faire apparaître tous les couplages qui peuvent exister entre les variables.

Une SPBA est une suite d'impulsions rectangulaires de longueur aléatoire et de moyenne nulle, qui permet d'approximer un bruit blanc discret. C'est donc un signal riche en fréquences, particulièrement bien adapté pour révéler le spectre fréquentiel d'un procédé.

La phase d'identification des paramètres du modèle MDL de l'unité, faisant partie de la présente invention repose sur 6 étapes :

1. Initialisation du modèle: A partir de données collectées via des modifications manuelles faites par l'opérateur sur des valeurs de consigne des MV, le logiciel ISIAC génère un premier modèle (M0) de l'unité à réguler. Ce modèle est utilisé par la suite par le contrôleur MVAC pour piloter l'unité. Pendant cette phase d'initialisation, le contrôleur MVAC n'est pas utilisé sur l'unité industrielle.

2. Génération des variations des MV: Hors ligne, c'est à dire sans lien avec le fonctionnement du procédé réel, ISIAC génère des variations pour chaque MV. Ces variations sont calculées pour mettre en évidence le spectre fréquentiel de l'unité, et pour faire apparaître les couplages entre les variables. Ce sont par exemple des séquences de type SBPA superposées aux valeurs courantes des MV. Plus généralement, ces variations pour chaque MV sont une suite d'incréments et de décréments, espacés de manière régulière ou non, et d'amplitudes telles qu'elles induisent des variations mesurables de tout ou partie des CV. On entend par mesurable le fait que les variations des mesures des CV, consécutives aux variations des MV, sont plus importantes que les variations liées au bruit de mesure (lui même lié à la technologie du capteur employé).

3. Validation des variations générées et réglage du contrôleur MVAC:
Hors ligne, des simulations du comportement de l'unité piloté par le contrôleur MVAC sont réalisées. Pour cela, le contrôleur MVAC est relié à un simulateur dynamique, qui reproduit approximativement le fonctionnement de l'unité en utilisant le modèle MDL disponible à l'étape considérée, soit M(n). Les variations définies à l'étape 2 sont mises en oeuvre en simulation via la fonctionnalité "cibles externes" de MVAC. Leurs effets sur les CV sont visualisés et analysés par un ingénieur contrôle de procédés. Les amplitudes des variations sur les MV définies à l'étape 2, peuvent être ajustées, et le réglage du contrôleur MVAC peut être affiné. Ces ajustements et réglages contiennent notamment une phase de relaxation des objectifs pour les CV.
On entend par relaxation le fait de transformer des consignes en bornes basses et hautes, d'augmenter la valeur des bornes maximales et de diminuer la valeur des bornes minimales.
Toutes ces opérations sont effectuées de manière que les nouvelles valeurs des bornes restent compatibles avec un fonctionnement sûr de l'unité, les spécifications sur les produits restant par ailleurs garanties. Cette relaxation des objectifs a pour but de permettre des variations plus importantes des MV, conduisant à des variations de CV elles mêmes suffisamment importantes pour que l'information contenue dans les données collectées présente un rapport signal sur bruit suffisant.
Il s'agit là d'un aspect relativement standard en traitement de l'information qui ne sera pas développé davantage.

4. Application des variations des MV au procédé réel et collecte des données: Dans cette étape le contrôleur MVAC est connecté sur l'unité.
MVAC, tel que réglé à l'issue de l'étape 3, applique automatiquement sur l'unité les variations définies et affinées sur les MV à l'étape 3, via la fonctionnalité "cibles externes". Comme MVAC est bouclé sur l'unité, l'atteinte des objectifs sur les CV (c'est à dire le respect des diverses contraintes) reste prioritaire.

C'est ce qui permet de conserver tout au long de cette étape une production aux spécifications requises.

5. <u>Génération des paramètres du procédé:</u> Hors ligne, ISIAC calcule les paramètres du modèle MDL de l'unité, à partir des données générées à l'étape 4.

6. <u>Évaluation de la précision du modèle:</u> Hors ligne, ISIAC fournit des indications sur la précision du modèle obtenu à l'issue de l'étape 4. Ces indications sont construites de la manière suivante:

> Soit $yj(t)$ un sous-ensemble des valeurs prises par la mesure de la CVj, pendant la phase de collecte à l'étape 4, sous ensemble comportant les valeurs utilisées pour l'identification par ISIAC à l'étape 5. Soit $moy(yj(t))$ la moyenne des valeurs de $yj(t)$.
> Soit $ypj(t)$ la valeur prédite pour ces valeurs yj (t), à partir du modèle élaboré par ISIAC à l'étape 5.

L'indication sur la précision du modèle pour la CVj est calculée comme la différence entre 1 et le quotient entre la norme euclidienne de l'écart entre $yj(t)$ et $ypj(t)$ et la norme euclidienne de l'écart entre $yj(t)$ et $moy(yj(t))$.

Si le modèle est parfait, l'écart entre mesure et prédiction est nul et l'indicateur vaut 1.

Lorsque la prédiction n'apporte pas plus d'information que la valeur moyenne $moy(yj(t))$, autrement dit qu'elle est de très mauvaise qualité, l'indicateur vaut 0. Cette fonctionnalité permet de statuer sur la nécessité de poursuivre les essais.

Si ISIAC indique qu'un ou plusieurs paramètres du modèle sont imprécis, on recommence les étapes 2 à 4, ou simplement l'étape 4 dans le cas où l'imprécision provient de perturbations du fonctionnement du procédé pendant l'application des variations sur les MV. Ce dernier cas est repéré par l'examen, sur les données collectées, du rapport entre d'une part le temps passé par les MV sur les objectifs définis aux étapes 2 et 3, et d'autre part le temps total de collecte. Pour l'itération des étapes, on utilise le modèle M(n) qui contient les derniers paramètres fiables obtenus à l'issue de l'étape 5.

<u>EXEMPLES SELON L'INVENTION</u>

<u>EXEMPLE 1</u>

Le premier exemple présenté porte sur le procédé de contrôle et régulation avancé d'une unité d'hydro désulfuration des essences.

Le modèle de cette unité comporte une grandeur de sortie CV, la teneur en soufre en sortie d'unité. Sa mesure est peu fréquente et bruitée.

Le modèle comporte deux grandeurs d'entrée MV1, le débit d'alimentation de l'unité et MV2, la température à l'entrée du réacteur d'hydrodésulfuration.

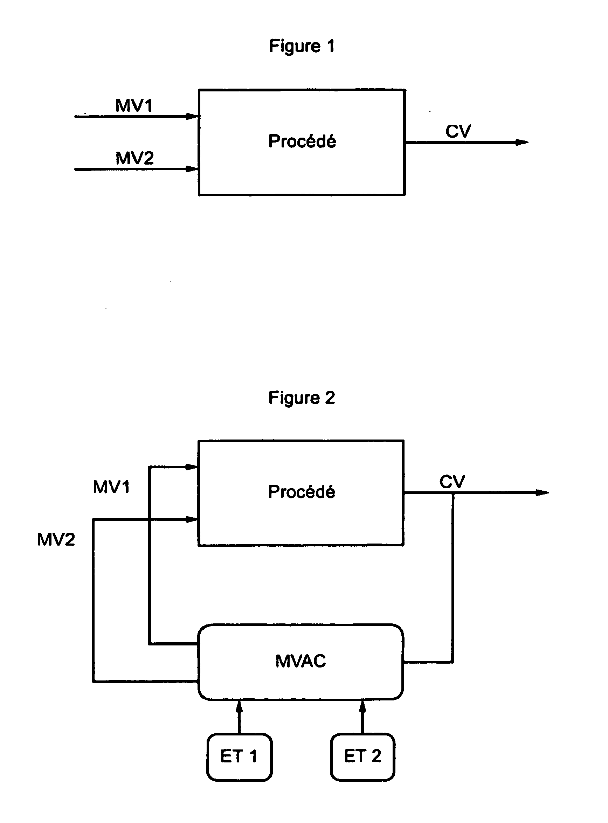

Bien entendu, le fait que le modèle du présent exemple ne comporte que deux variables d'entrée et une variable de sortie n'est nullement limitatif, et le présent procédé de contrôle et régulation s'applique de la même manière à des systèmes comportant un nombre quelconque de variables d'entrée et de variables de sortie. Le schéma fonctionnel de l'unité d'hydrodésulfuration est tel que présenté à la figure 1.

Les deux variables d'entrée, MV1 et MV2, agissent sur la CV, il y a donc un couplage. On suppose que le modèle initial utilisé dans MVAC (M(0)) est très éloigné du procédé.

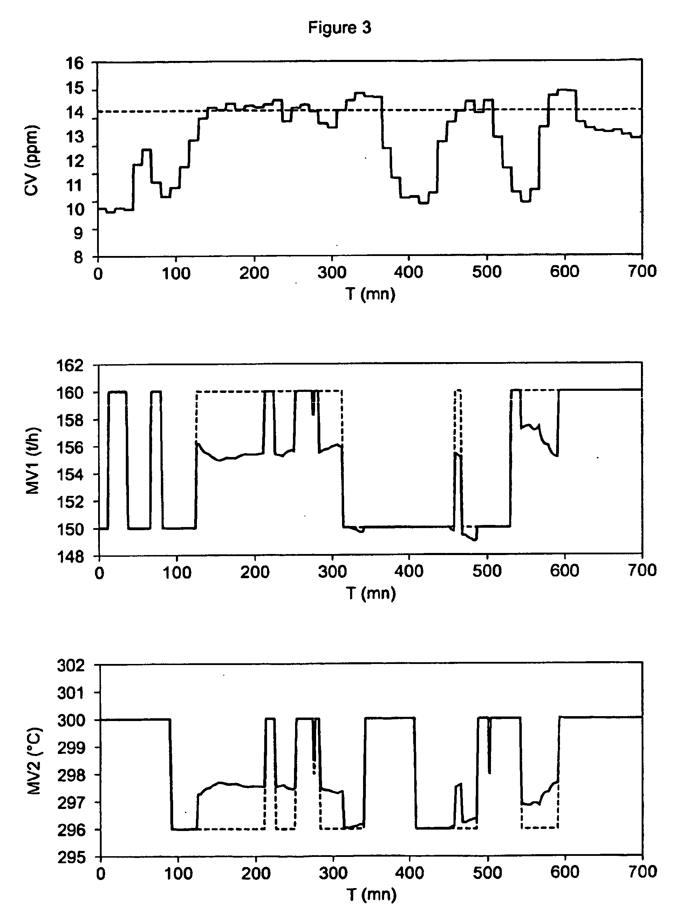

La figure 3 montre l'intérêt du bouclage du contrôleur MVAC pour les phases d'identification. Des variations ont été calculées avec ISIAC (étapes 2 et 3) et sont appliquées sur chacune des MV avec le contrôleur bouclé (étape 4).

Les objectifs sur la CV ont été réduits à une contrainte maximum à ne pas dépasser (CV inférieure à CV max).

Dans le cas présent à deux MV, et compte tenu des temps de réponse du procédé, un essai de l'ordre de la journée permet d'obtenir les informations nécessaires au calcul d'un nouveau modèle MDL.

Trois graphiques sont présentés sur la figure 3 :

- Le graphique supérieur représente l'évolution dans le temps de la mesure de la CV en fonction du temps. Le temps (T) est en abscisse et avec pour unité la minute. La CV est la teneur en soufre mesurée en ppm.

En trait plein on a représenté la mesure réelle qui comporte du bruit et d'éventuelles perturbations. La contrainte maximum à ne pas dépasser est représentée en traits pointillés ( 14,3 ppm).

Le graphique du milieu représente l'évolution en fonction du temps de la MV1.

Le temps (T) est en abscisse et avec pour unité la minute. La MV1 est le débit de charge mesuré en tonne/heure (t/h).

En traits pointillés, on a représenté la valeur de la variation calculée aux étapes 2 et 3 pour la fonctionnalité "cible externe".

En trait plein, on a représenté la valeur réellement appliquée sur l'unité d'hydrodésulfuration. Ces deux valeurs diffèrent quand le contrôleur MVAC doit modifier les MV pour satisfaire les objectifs prioritaires des CV.

Le graphique du bas représente l'évolution en fonction du temps de la MV2.

Le temps (T) est en abscisse avec pour unité la minute. La MV2 est la température d'entrée dans le réacteur en °C.

En pointillés, on a représenté la valeur de la variation calculée aux étapes 2 et 3.

En trait plein, on a représenté la valeur réellement appliquée sur l'unité. Ces deux valeurs diffèrent quand le contrôleur MVAC doit modifier les MV pour satisfaire les objectifs prioritaires des CV.

Le cas exposé correspond au fonctionnement suivant la figure 2 (l'acronyme ET sert à désigner la fonctionnalité cible externe) :

Les valeurs à atteindre par les MV (variations calculées aux étapes 2 et 3) sont assignées aux entrées de MVAC selon la fonctionnalité "cible externe". Le contrôleur MVAC calcule ensuite les valeurs des MV à appliquer à l'unité tout en garantissant que la CV respecte les objectifs.

Dans le présent exemple, on se place dans des conditions difficiles :

• la mesure de la CV est peu fréquente et bruitée;
• le modèle initial utilisé dans MVAC est éloigné du modèle du procédé.

La moindre fréquence de mesure est caractérisée par des paliers qui montrent l'absence de nouvelles informations pendant un certain temps. Ce peut être par exemple le temps d'analyse d'un sulfurimètre ( équipement spécifique pour la mesure du soufre) ou d'un chromatographe.

Les variations sur les MV sont appliquées en boucle fermée selon l'invention (étape 4), c'est à dire que l'objectif sur la CV continue d'être prioritaire pendant la phase d'identification. On voit que la valeur mesurée de la CV s'éloigne peu de sa contrainte maximale et que les MV atteignent rapidement les valeurs souhaitées et définies lors des étapes 2 et 3.

En présence de mesures peu fréquentes et bruitées, l'application du procédé de contrôle et régulation selon l'invention conduit à des résultats qui constituent un progrès par rapport à l'art antérieur:

1. La production hors spécification reste faible.
2. La valeur des MV est réajustée automatiquement mais la raideur des fronts est conservée, donc le signal garde de bonnes caractéristiques pour l'identification. Dès que possible, les commandes retournent très vite aux valeurs définies lors des étapes 2 et 3.

EXEMPLE 2

Le second exemple est qualitatif pour ne pas multiplier les figures qui sont du même type que celles relatives à l'exemple 1.

Cet exemple porte sur le contrôle simplifié d'une unité d'hydrogénation des essences. Dans cette unité, la charge a une teneur en composés insaturés relativement importante et est mise au contact d'un catalyseur en présence d'hydrogène. Dans les conditions d'hydrogénation usuelles (température comprises entre 250°C et 350°C, pression entre 20 et 50 bars avec catalyseur à base de Co/Mo ou Ni/Mo sur support alumine), les composés insaturés de la charge sont hydrogénés. Cette réaction d'hydrogénation est exothermique, et il convient de bloquer les réactions par un fluide de refroidissement, pour éviter les réactions parasites de craquage ou autre .

Le débit de charge, ainsi que la température à l'entrée du réacteur d'hydrogénation sont constants.

Le contrôleur agit sur le débit d'hydrogène qui constitue la première variable d'entrée (MV1) et sur le débit de fluide froid destiné à bloquer les réactions, qui constitue la seconde variable MV2.

Le schéma de commande comporte deux grandeurs de sortie CV.

La première CV dite CV1 est la teneur en styrène en sortie du réacteur. C'est une variable qui constitue une bonne image de la teneur en composés insaturés restant après la réaction d'hydrogénation. Cette CV1 doit rester autour d'une valeur de référence fixée, mais, lors des phases d'identification, elle peut évoluer entre des extrema fixés.

La seconde CV, dite CV2, est l'écart de température entre la sortie et l'entrée du réacteur. Cette variable doit rester en deçà d'un maximum fixé, afin de protéger le catalyseur et de garantir un fonctionnement stable du réacteur.

Un incrément de la MV1, le débit d'hydrogène, tend à favoriser la réaction par augmentation de la pression partielle d'hydrogène. Dans ce cas, la teneur en styrène diminue et l'écart de température entre sortie et entrée du réacteur augmente.

Un incrément de la MV2, le débit de fluide froid, a tendance à diminuer l'écart de température au détriment de la réaction : la teneur en styrène augmente. Le schéma fonctionnel de ce procédé à deux MV et deux CV est analogue à celui de la présenté sur la figure 1 avec une MV supplémentaire, soit MV2.

Les deux variables d'entrée, MV1 et MV2, agissent sur les deux variables de sortie CV1 et CV2. On suppose que le modèle utilisé dans MVAC (M(0)) est très éloigné du procédé.

Les problèmes qui surviennent lorsque l'invention n'est pas mise en oeuvre, c'est à dire lorsque le contrôleur MVAC n'est pas bouclé, sont des problèmes de dépassement des valeurs limites ou des valeurs cibles.

Les variations pour les MV peuvent induire une violation des objectifs prioritaires pour les CV. Les extrema pour la CV1 peuvent être violés. De même, le maximum pour la CV2 peut être dépassé. Cette situation s'accompagne d'une production hors spécification qui est évidemment dommageable sur le plan économique

L'intérêt du bouclage du contrôleur MVAC pendant les phases d'identification réside dans le respect de toutes les contraintes qui permet donc une production conforme aux spécifications.

Les variations ont été calculées avec ISIAC (étapes 2 et 3) et sont appliquées sur chacune des MV avec le contrôleur bouclé (étape 4).

Les objectifs sur la CV1 ont été transformés en contraintes minimale et maximale à ne pas dépasser (CV inférieure à CV max et supérieur à CV min, étape 3).

Dans le cas du présent exemple à deux MV, pour un procédé avec des temps de réponse de l'ordre de quelques dizaines de minutes, un essai de l'ordre de huit heures permet d'obtenir les informations nécessaires au calcul d'un nouveau modèle MDL et ceci avec une production respectant les spécifications sur toute la durée de l'identification..

## Revendications

1. Procédé de contrôle et régulation avancé d'une unité industrielle représentée par un modèle dynamique linéaire MDL, présentant des grandeurs d'entrée dites MV, et des grandeurs de sortie dites CV, ledit procédé fonctionnant en boucle fermée et faisant appel à une phase d'identification des paramètres du modèle MDL qui est réalisée au moyen d'un contrôleur (MVAC) et d'un logiciel d'identification (ISIAC) et qui consiste en la succession d'étapes suivante:

   - une étape 1 d'initialisation dans laquelle à partir de données collectées via des modifications manuelles par l'opérateur, le logiciel ISIAC génère un premier modèle (M0) de l'unité industrielle, modèle utilisé par la suite par le contrôleur MVAC pour piloter ladite unité.
   - une étape 2 de génération des variations des MV dans laquelle, hors ligne, c'est à dire sans lien avec le fonctionnement de l'unité, ISIAC génère des variations pour chaque MV, ces variations pour chaque MV étant constituées d'une suite d'incréments et de décréments, d'amplitudes telles qu'elles induisent des variations mesurables de tout ou partie des CV **caractérisé par**
   - une étape 3 de validation des variations des MV et de réglage du contrôleur MVAC dans laquelle, hors ligne, des simulations du comportement de l'unité pilotée par le contrôleur MVAC, sont réalisées en reliant le contrôleur MVAC à un simulateur dynamique, qui reproduit approximativement le fonctionnement de ladite unité, et en utilisant le modèle M(n) disponible à cette étape, les variations définies à l'étape 2 étant mises en oeuvre en simulation via la fonctionnalité "cible externe" de MVAC, les amplitudes des variations sur les MV définies à l'étape 2 étant ajustées, les objectifs pour les CV étant relaxés, et le réglage du contrôleur étant affiné par intervention d'un opérateur.
   - une étape 4 de génération de réponses de l'unité dans laquelle le contrôleur MVAC, tel que réglé à l'issue de l'étape 3, est connecté à ladite unité en boucle fermée et applique automatiquement sur l'unité les variations définies sur les MV à l'étape 3, via la fonctionnalité "cible externe".
   - une étape 5 de génération des paramètres par ISIAC dans laquelle hors ligne, le logiciel d'identification ISIAC calcule les paramètres du modèle de l'unité à partir des données générées à l'étape 4.
   - une étape 6 d'évaluation de la précision du modèle dans laquelle le logiciel d'identification ISIAC effectue un calcul de la précision des paramètres obtenus à l'issue de l'étape 5 à partir d'un critère permettant de décider a) l'arrêt des itérations si la précision est satisfaisante; b) l'itération à partir de l'étape 2 si la précision est insuffisante sur un ou plusieurs paramètres; c) l'itération à partir de l'étape 4 dans le cas où l'imprécision provient de perturbations du fonctionnement de l'unité pendant l'application des variations sur les MV.

2. Procédé de contrôle et régulation avancé d'une unité industrielle selon la revendication 1 faisant appel à une phase d'identification des paramètres d'un modèle MDL de ladite unité dans laquelle les signaux générés par ISIAC lors de l'étape 2 sont des signaux de type séquence binaire pseudo aléatoire (SBPA) qui sont appliqués directement au niveau du contrôleur MVAC.

3. Procédé de contrôle et régulation avancé d'une unité industrielle selon la revendication 1 faisant appel à une phase d'identification des paramètres d'un modèle MDL de ladite unité, dans laquelle le critère d'itération utilisé à l'étape 6 déclenchant un retour à l'étape 4 est défini par le rapport entre d'une part le temps passé par les MV sur les objectifs définis aux étapes 2 et 3, et d'autre part le temps total de collecte, ladite itération étant effectué à partir du modèle MDL(n) qui contient les derniers paramètres fiables obtenus à l'issue de l'étape 5.

4. Application du procédé de contrôle et régulation selon la revendication 1 à une unité d'hydrodésulfuration d'une charge hydrocarbonée de type essence ou gazole, dans laquelle les grandeurs d'entrée sont le débit d'alimentation (MV1) de l'unité et la température à l'entrée de l'unité d'hydrodésulfuration (MV2) et la grandeurs de sortie (CV) est la teneur en soufre de l'essence ou du gazole traité.

5. Application du procédé de contrôle et régulation selon la revendication 1 à une unité d'hydrogénation d'essences oléfiniques issues d'un procédé de craquage catalytique dans laquelle les grandeurs d'entrée sont le débit d'hydrogène (MV1) et le débit de fluide froid destiné à bloquer les réactions (MV2) et les grandeurs de sortie sont la teneur en styrène en sortie de l'unité (CV1) et la différence de température entre la sortie et l'entrée de l'unité (CV2).

## Claims

1. Process for monitoring and advanced regulation of an industrial unit that is represented by a linear dynamic MDL model, having so-called MV input magnitudes and so-called CV output magnitudes, whereby said process operates in a closed loop and employs a phase for identification of parameters of the MDL model that is carried out by means of a monitor (MVAC) and identification software (ISIAC) and that consists in the following series of stages:

   - A stage 1 for initialization in which the ISIAC software generates a first model (M0) of the industrial unit, a model that is later used by the MVAC monitor to control said unit, from data collected via manual modifications by the operator.
   - A stage 2 for generation of MV variations in which, offline, i.e., without a connection to the operation of the unit, ISIAC generates variations for each MV, whereby these variations for each MV consist of a series of increments and decrements of amplitudes such that they induce measurable variations of all or part of the CV, the process being **characterized by**:
   - A stage 3 for validation of the variations of MV and for regulation of the MVAC monitor in which, offline, simulations of the behavior of the unit that is controlled by the MVAC monitor are implemented by connecting the MVAC monitor to a dynamic simulator, which approximately reproduces the operation of said unit, and by using the M(n) model that is available in this stage, whereby the variations that are defined in stage 2 are implemented in simulation via the MVAC "external target" functionality, whereby the amplitudes of the variations over the MV defined in stage 2 are adjusted, the objectives for the CV are relaxed, and the regulation of the monitor is refined by intervention of an operator.
   - A stage 4 for generating responses from the unit in which the MVAC monitor, as regulated at the output of stage 3, is connected to said closed-loop unit and applies automatically to the unit the variations that are defined in the MV in stage 3, via the "external target" functionality.
   - A stage 5 for generating parameters via ISIAC, in which, offline, the ISIAC identification software calculates the parameters of the model of the unit from data generated in stage 4.
   - A stage 6 for evaluating the precision of the model, in which the ISIAC identification software implements a calculation of the precision of the parameters that are obtained at the output of stage 5 starting from a criterion that makes it possible to decide a) the stopping of the iterations if the precision is satisfactory; b) the iteration starting from stage 2 if the precision on one or more parameters is insufficient; c) the iteration starting from stage 4 in the case where the imprecision originates from disruptions of the operation of the unit during the application of the variations on the MV.

2. Process for monitoring and advanced regulation of an industrial unit according to claim 1 that employs a phase for identification of the parameters of an MDL model of said unit in which the signals that are generated by ISIAC during stage 2 are pseudorandom binary sequence-type signals (SBPA) that are applied directly to the MVAC monitor.

3. Process for monitoring and advanced regulation of an industrial unit according to claim 1 that employs a phase for an identification of the parameters of an MDL model of said unit, in which the iteration criterion that is used in stage 6 that triggers a return to stage 4 is defined by the ratio between, on the one hand, the time that has passed by the MV on the objectives that are defined in stages 2 and 3, and, on the other hand, the total collection time, whereby said iteration is carried out from the MDL(n) model that contains the last reliable parameters that are obtained at the output of stage 5.

4. Application of the process for monitoring and regulation according to claim 1 to a unit for hydrodesulfurization of a gasoline- or gas-oil-type hydrocarbon feedstock, in which the input magnitudes are the feed rate (MV1) of the unit and the temperature at the inlet of the hydrodesulfurization unit (MV2), and the output magnitude (CV) is the sulfur content of the treated gasoline or gas oil.

5. Application of the process for monitoring and regulation according to claim 1 to a unit for hydrogenation of olefinic gasolines that are obtained from a catalytic cracking process in which the input magnitudes are the flow rate of hydrogen (MV1) and the flow rate of cold fluid intended to block the reactions (MV2), and the output magnitudes are the styrene content at the outlet of the unit (CV1) and the temperature difference between the outlet and the inlet of the unit (CV2).

## Patentansprüche

1. Verfahren zur fortgeschrittenen Steuerung und Regelung einer Industrieanlage, die durch ein lineares dynamisches Modell MDL dargestellt wird, das MV genannte Eingangsgrößen und CV genannte Ausgangsgrößen aufweist, wobei dieses Verfahren in einem geschlossenen Regelkreis betrieben wird und eine Phase der Identifikation der Parameter des Modells MDL verwendet, die mithilfe einer Steuerung (MVAC) und einer Identifikationssoftware (ISIAC) durchgeführt wird und die aus der Abfolge der folgenden Schritte besteht:

- einen Schritt 1 des Initialisierens, in welchem die Software ISIAC ausgehend von Daten, die durch manuelle Modifikationen des Bedieners erfasst werden, ein erstes Modell (M0) der Industrieanlage erzeugt, wobei dieses Modell nachfolgend von der Steuerung (MVAC) zur Steuerung dieser Anlage verwendet wird,

- einen Schritt 2 des Erzeugens von Variationen der MV, in welchem ISIAC offline, das heißt, unabhängig vom Betrieb der Anlage für jede MV Variationen erzeugt, wobei diese Variationen für jede MV aus einer Folge von Inkrementen oder Dekrementen besteht, deren Amplituden derart sind, dass sie an allen oder an einem Teil der CV messbare Variationen induzieren, **gekennzeichnet durch**

- einen Schritt 3 des Validierens der Variationen der MV und des Einstellens der Steuerung MVAC, in welchem Simulationen des Verhaltens der von der Steuerung MVAC gesteuerten Anlage offline durchgeführt werden, indem die Steuerung MVAC mit einem dynamischen Simulator verbunden wird, der den Betrieb dieser Anlage annähernd reproduziert, und indem das in diesem Schritt verfügbare Modell M(n) verwendet wird, wobei die in Schritt 2 definierten Variationen über die Funktionalität "externes Ziel" der MVAC in der Simulation angewandt werden, die Amplituden der in Schritt 2 definierten Variationen an die MV angepasst werden, die Ziele für die CV gelöst werden und die Einstellung der Steuerung **durch** den Eingriff eines Bedieners verfeinert wird,

- einen Schritt 4 des Erzeugens des Ansprechverhaltens der Anlage, in welchem die Steuerung MVAC in dem Zustand, wie sie

- einen Schritt 4 des Erzeugens des Ansprechverhaltens der Anlage, in welchem die Steuerung MVAC in dem Zustand, wie sie am Ende von Schritt 3 eingestellt wurde, in einem geschlossenem Regelkreis mit dieser Anlage verbunden wird und die Variationen, die in Schritt 3 über die Funktionalität "externes Ziel" an den MV definiert wurden, automatisch auf die Anlage anwendet,

- einen Schritt 5 des Erzeugens der Parameter **durch** ISIAC, in welchem die Identifikationssoftware ausgehend von den in Schritt 4 erzeugten Daten offline die Parameter des Modells der Anlage berechnet,

- einen Schritt 6 des Bewertens der Genauigkeit des Modells, in welchem die Identifikationssoftware ISIAC eine Berechnung der Genauigkeit der am Ende von Schritt 5 erhaltenen Parameter anhand eines Kriteriums durchführt, das es erlaubt, zu entscheiden: a) den Abbruch der Iterationen, wenn die Genauigkeit zufriedenstellend ist; b) die Iteration von Schritt 2 an, wenn die Genauigkeit eines oder mehrerer Parameter nicht ausreicht; c) die Iteration von Schritt 4 an, falls die Ungenauigkeit auf Betriebsstörungen der Anlage während der Anwendung der Variationen auf die MV zurückzuführen ist.

2. Verfahren zur fortgeschrittenen Steuerung und Regelung einer Industrieanlage nach Anspruch 1, das eine Phase der Identifikation der Parameter eines Modells MDL dieser Anlage verwendet, wobei die Signale, die in Schritt 2 von ISIAC erzeugt werden, Signale des Typs pseudostochastische Binärsignalfolge (SBPA) sind, die direkt an die Steuerung MVAC angelegt werden.

3. Verfahren zur fortgeschrittenen Steuerung und Regelung einer Industrieanlage nach Anspruch 1, das eine Phase der Identifikation der Parameter eines Modells MDL dieser Anlage verwendet, wobei das in Schritt 6 verwendete Iterationskriterium, das einen Rücksprung zu Schritt 4 auslöst, durch das Verhältnis zwischen einerseits einem Zeitanteil, der von den MV mit den in Schritt 2 und 3 definierten Aufgaben verbracht wurde, und der Gesamterfassungszeit andrerseits definiert wird, wobei diese Iteration vom Modell MDL(n) ausgehend durchgeführt wird, das die letzten zuverlässigen Parameter enthält, die am Ende von Schritt 5 erhalten wurden.

4. Anwendung des Steuer- und Regelverfahrens nach Anspruch 1 auf eine Anlage zur Hydroentschwefelung einer kohlenwasserstoffhaltigen Charge des Typs Benzin oder Dieselöl, wobei die Eingangsgrößen die Zulaufmenge (MV1) der Anlage und die Temperatur am Eingang der Hydroentschwefelungsanlage (MV2) sind und die Ausgangsgröße (CV) der Schwefelgehalt des behandelten Benzins oder Dieselöls ist.

5. Anwendung des Steuer- und Regelverfahrens nach Anspruch 1 auf eine Anlage zur Hydrogenisierung von olefinischen Benzinen, die aus einem katalytischen Crackingverfahren stammen, wobei die Eingangsgrößen der Wasserstoffdurchsatz (MV1) und der Kaltfluiddurchsatz zur Reaktionshemmung (MV2) sind und die Ausgangsgrößen der Styrolgehalt am Ausgang der Anlage (CV1) und der Temperaturunterschied zwischen dem Ausgang und dem Eingang der Anlage (CV2) ist.

Figure 1

Figure 2

## Figure 3

**EP 2 239 639 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6819964 B